# EUROPEAN PATENT APPLICATION

(11) **EP 1 624 220 A1**
(43) Date of publication of application: **08.02.2006**
(21) Application number: 05005255.4
(22) Date of filing: 10.03.2005
(51) Int. Cl.: F16F 9/48

(54) **Hydraulic shock absorber**

(30) Priority: 04.08.2004 JP 2004228657
(71) Applicant: SHOWA CORPORATION, Gyoda-shi, Saitama (JP)
(72) Inventor: Tomonaga, Takao Showa Corp., Iwata-gun Shizuoka (JP)
(74) Representative: Grünecker, Kinkeldey, Stockmair & Schwanhäusser Anwaltssozietät

(57) **Abstract**

In a hydraulic shock absorber (10), a valve spring (61) in a side of a compression side plate valve (42), a backup spring (62) in a side of a cylinder (11), and an intermediate spring receiver (63) pinched between the valve spring (61) and the backup spring (62) are provided between the compression side plate valve (42) and the cylinder (11), a guide (64) guiding the intermediate spring receiver (63) is provided in the periphery of a piston rod (12), and a stopper portion (64C) with which the intermediate spring receiver (63) is collided is provided in the guide (64) close to the piston (22).

## Description

The present invention relates to a hydraulic shock absorber.

In a hydraulic shock absorber of a motorcycle or the like, there are needs to make a compression side damping force small in the depth of a compressed stroke (a side close to a pressing end) from a riding 1G position (a state in which one rider rides on and a vehicle is at a standstill), for the purpose of improving an absorbability of a road surface vibration during a cornering or the like.

In a hydraulic shock absorber described in Japanese Utility Model No. 2517798 (patent document 1), only a sprig force of a compression side valve spring near the riding 1G position is set as a spring force applied to a compression side plate valve, a spring force of a first position detecting spring is added in an extended side therefrom, and a spring force of a rebound spring is added in a further extended side. Further, in an early stage of a compressing stroke from the extended side, a composite spring force of the rebound spring, the first position detecting spring and the compression side valve spring is applied to the compression side plate valve, a composite spring force of the first position detecting spring and the compression side valve spring is applied to the compression side plate valve in the extended side therefrom, and only the spring force of the compression side valve sprig is applied to the compression side plate valve near the riding 1G position which is further close to the extended side.

The hydraulic shock absorber of the patent document 1 has the following problems.
(1) A damping force in the extended side from the position near the riding 1G position is dependent on the position, however, the damping force in the extended side from the position near the riding 1G position is not dependent on the position.
(2) In the extended end side, the compression side valve spring is compressed without limit so as to apply an excessively large spring force to the compression side plate valve, and there is a risk that a deformation and a damage are generated in the compression side valve.

An object of the present invention is to reduce a generation of a compression side damping force in the depth of a compression stroke without generating a deformation and a damage in a compression side plate valve, in a hydraulic shock absorber.

The present invention relates to a hydraulic shock absorber in which a piston rod is inserted to a cylinder, a piston is provided in an inserting portion of the piston rod to the cylinder, and a compression side plate valve is provided in a flow path of the piston. A valve spring in a side of the compression side plate valve, a backup spring in a side of the cylinder, and an intermediate spring receiver pinched by the valve spring and the backup spring are provided between the compression side plate valve and the cylinder. A guide guiding the intermediate spring receiver is provided in the periphery of the piston rod, and a stopper portion against which the intermediate spring receiver is collided is provided in the guide close to the piston. A spring force of the valve spring and a spring force of the backup spring are set in a balanced state at a predetermined stroke of the piston rod, only the spring force of the valve spring is applied to the compression side plate valve by making the spring force of the backup spring larger in the expanded side from a stroke in the balanced state so as to press the intermediate spring receiver to the stopper portion of the guide, and a combined spring force of the valve spring and the backup spring is applied to the compression side plate valve by making the spring force of the valve spring larger in the pressed side from the stroke in the balanced state so as to make the intermediate spring receiver apart from the stopper portion of the guide.

The present invention will be more fully understood from the detailed description given below and from the accompanying drawings which should not be taken to be a limitation on the invention, but are for explanation and understanding only.
The drawings:
FIG. 1 is a cross sectional view showing a pressed state of a hydraulic shock absorber;
FIG. 2 is a cross sectional view showing an extended state of the hydraulic shock absorber;
FIG. 3 is a side elevational view showing the hydraulic shock absorber;
FIG. 4 is a cross sectional view showing a pump for adjusting a spring load;
FIG. 5 is an enlarged view of a main portion in FIG. 1; and
FIG. 6 is an enlarged view of a main portion in FIG. 2.

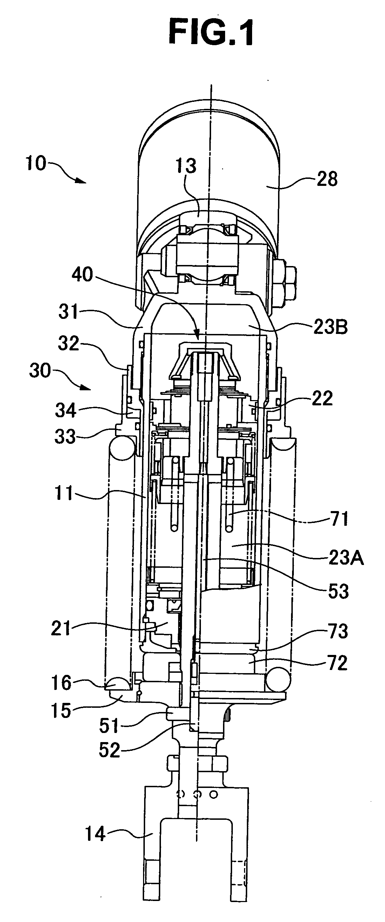

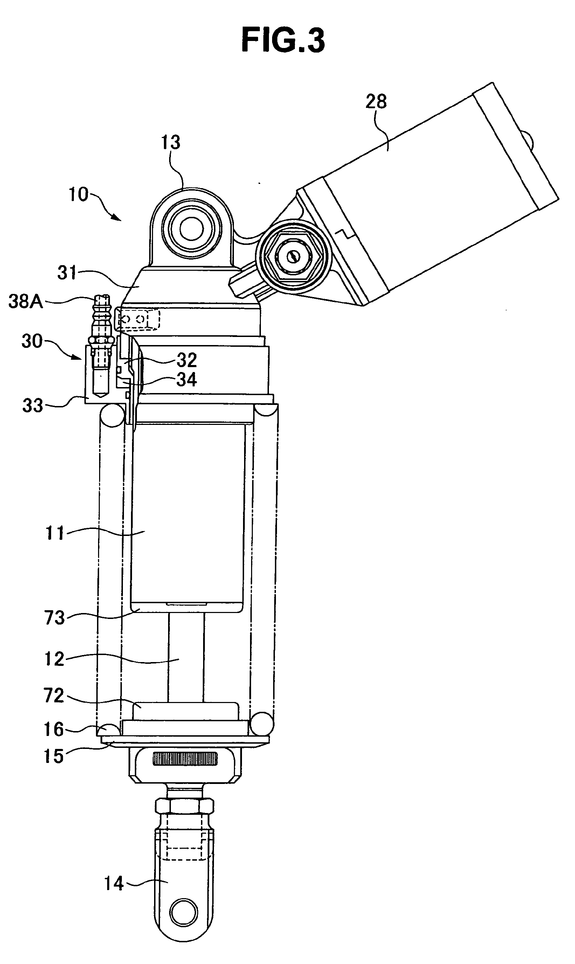

A hydraulic shock absorber 10 is structured, as shown in FIGS. 1 to 3, such that a hollow piston rod 12 is inserted to a cylinder 11 structuring a damper main body. The cylinder 11 is provided with a vehicle body side mounting member 13, and the piston rod 12 is provided with an axle side mounting member 14.

The hydraulic shock absorber 10 has a vehicle height adjusting apparatus 30 mentioned below in an outer periphery of the cylinder 11, and a suspension spring 16 is interposed between a spring receiving member 33 of the vehicle height adjusting apparatus 30 and a spring receiving member 15 provided in piston rod 12.

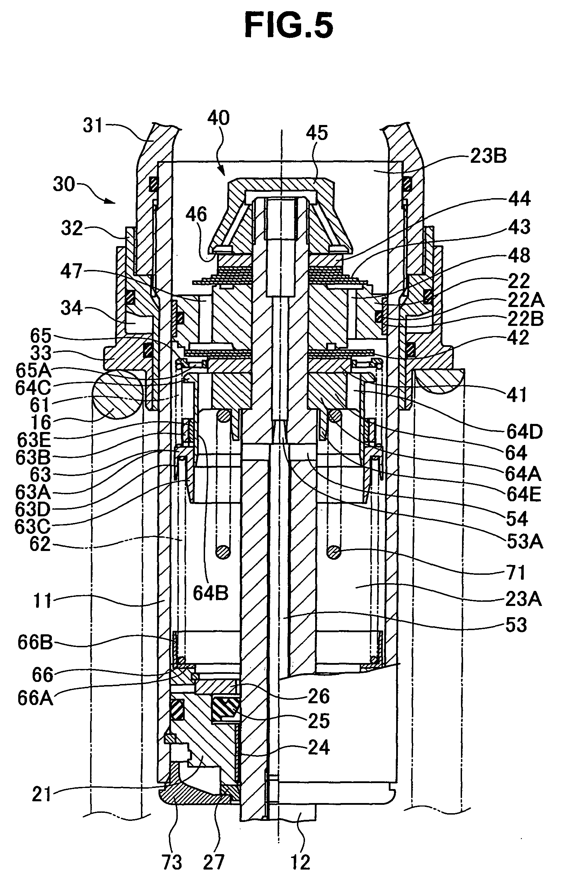

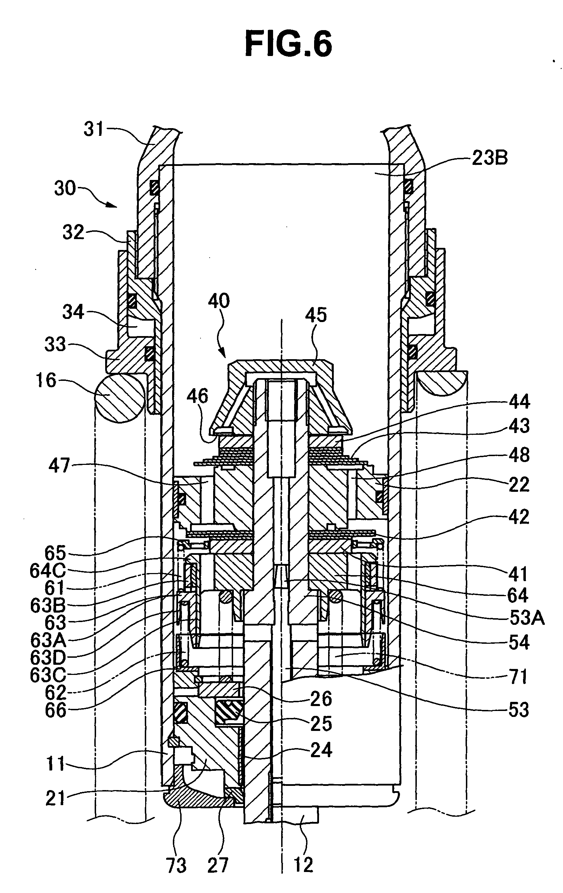

The hydraulic shock absorber 10 is structured such that the piston rod 12 is inserted to an inner portion of the cylinder 11 from a rod guide 21 provided in an opening portion of the cylinder 11, and the inner portion of the cylinder 11 is sectioned into a rod side oil chamber 23A in which the piston rod 12 exists, and a piston side oil chamber 23B in which the piston rod 12 does not exist, by a piston 22 provided in an inserting end of the piston rod 12. In this case, the rod guide 21 makes the piston rod 12 slidable along an inner diameter portion provided with a bush 24, an oil seal 25, a seal presser foot 26 and a dust seal 27 (FIGS. 5 and 6).

The hydraulic shock absorber 10 is structured such that a sub tank 28 for compensating a volume of the piston rod 12 moving forward into and apart from the cylinder 11 is communicated with a piston side oil chamber 23B.

The vehicle height adjusting apparatus 30 is structured such that a cap member 31 is screwed into and fitted to the cylinder 11 serving as a damper main body in a liquid tight manner, the cap member 31 is fixed to the cylinder 11, and the vehicle body side mounting member 13 mentioned above is provided in the cap member 31.

The vehicle height adjusting apparatus 30 is structured such that an approximately tubular fixed partition wall member 32 is inserted and attached to an outer periphery of the cylinder 11 and the cap member 31 from an opposite side to the vehicle body side mounting member 13 of the cylinder 11, an inner periphery in one end side of the fixed partition wall member 32 is fitted to an outer periphery of the cylinder 11, an inner periphery in the other end side of the fixed partition wall member 32 is fitted to an outer periphery of the cap member 31, and an inner peripheral step portion of the fixed partition wall member 32 is brought into contact with an end surface of the cap member 31 so as to be supported.

The vehicle height adjusting apparatus 30 is structured such that an approximately tubular slidable spring receiving member 33 is inserted and attached to an outer periphery of the fixed partition wall member 32, a small diameter inner peripheral portion of the slidable spring receiving member 33 is fitted to a small-diameter outer peripheral portion of the fixed partition wall member 32 in a liquid tight manner and in a slidable manner, a large-diameter inner peripheral portion of the slidable spring receiving member 33 is fitted to a large-diameter outer peripheral portion of the fixed partition wall member 32 in a liquid tight manner and a slidable manner, and a jack oil chamber 34 is sectioned in a sealing manner between the fixed partition wall member 32 and the slidable spring receiving member 33. The slidable spring receiving member 33 supports one end portion of the suspension sprig 16 as mentioned above.

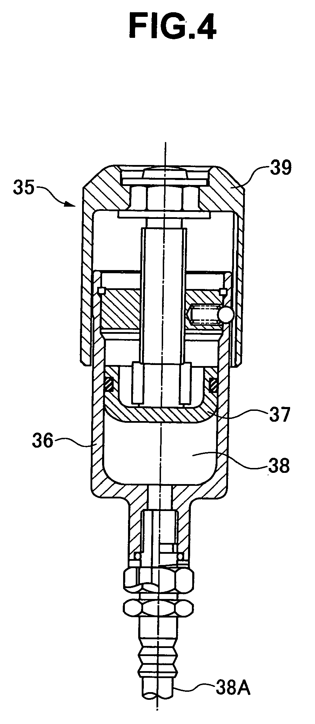

The vehicle height adjusting apparatus 30 has a hydraulic pump 35 as shown in FIG. 4. The hydraulic pump 35 is constituted by a manual pump (in this case, an electric pump may be employed), and is structured such that a pump oil chamber 38 is sectioned by a pump housing 36 and a plunger 37, the plunger 37 is provided in a leading end of a handle 39 screwed and attached to the pump housing 36, and a working fluid in the pump oil chamber 38 expanded and contracted by the plunger 37 moving forward and backward on the basis of a rotational operation of the handle 39 is supplied to and discharged from the jack oil chamber 34 via a flexible hydraulic hose 38A.

When ascending the vehicle height by the vehicle height adjusting apparatus 30, the slidable spring receiving member 33 is ascended by supplying the working fluid in the pump oil chamber 38 to the jack oil chamber 34 so as to increase a pressure in the jack oil chamber 34, thereby enlarging an initial set load of the suspension spring 16. When descending the vehicle height, the slidable spring receiving member 33 is descended by discharging the working fluid in the jack oil chamber 34 to the pump oil chamber 38 so as to reduce a pressure in the jack oil chamber 34, thereby making the initial set load of the suspension spring 16 small.

The hydraulic shock absorber 10 absorbs an impact force applied from a road surface at a time when the vehicle travels on the basis of a displacement of the suspension spring 16. In this case, the hydraulic shock absorber 10 inhibits an expanding and contracting vibration of the cylinder 11 and the piston rod 12 generated in accordance with an impact absorption by the suspension spring 16, on the basis of a damping force generated by a damping force generating apparatus 40 provided in the piston 22 and a damping force generating apparatus (not shown) provided in the sub tank 28.

The damping force generating apparatus 40 is structured such that a guide 64 of an intermediate spring receiver 63, a valve stopper 41, a compression side plate valve 42, the piston 22, an expansion side plate valve 43 and a valve stopper 44 mentioned below are inserted and attached to an insertion end of the piston rod 12 inserted to the cylinder 11, and are fixed by a sub valve housing 45 (a sub plate valve 46).

The piston 22 is in slidable contact with the inner portion of the cylinder 11 in a liquid tight manner via an O-ring 22A and a bush 22B provided in an outer periphery thereof The piston 22 is provided with a compression side flow path 47 which is provided with the compression side plate valve 42 and can communicate the rod side oil chamber 23A with the piston side oil chamber 23B, and an expansion side flow path 48 which is provided with the expansion side plate valve 43 and can communicate the rod side oil chamber 23A with the piston side oil chamber 23B.

Further, the damping force generating apparatus 40 moves forward and backward the damping force adjusting rod 53 screw moved by the hollow portion of the piston 12 with respect to the hollow portion of the piston rod 12 via a rotor 52, on the basis of a rotating operating of an adjuster 51 provided in an outer end of the piston rod 12, and can adjust a flow path area of a bypass passage 54 provided in the piston rod 12 by a needle valve 53A in a leading end of the damping force adjusting rod 53. The bypass passage 54 bypasses the compression side flow path 47 and the expansion side flow path 48 of the piston 22, and is structured such that one end is open to the rod side oil chamber 23A, and the other end is open to the piston side oil chamber 23B via the sub plate valve 46 of the sub valve housing 45.

Accordingly, in the damping force generating apparatus 40, the oil in the piston side oil chamber 23B passes through the compression side flow path 47, opens the compression side plate valve 42, and is introduced to the rod side oil chamber 23A, at a time of compressing the hydraulic shock absorber 10, thereby generating the compression side damping force.

Further, when the hydraulic shock absorber 10 is expanded, in the case that a relative speed of the cylinder 11 and the piston rod 12 is low, the oil in the rod side oil chamber 23A passes through the bypass passage 54 having the needle valve 53A and the sub plate valve 46, is applied a throttle resistance by the needle valve 53A therebetween, and flows to the piston side oil chamber 23B while flexibly deforming the sub plate valve 46, thereby generating the expansion side damping force. The damping force is adjusted on the basis of the rotating operation of the adjuster 51.

Further, when the hydraulic shock absorber 10 is expanded, and the relative speed of the cylinder 11 and the piston rod 12 is middle or high, the oil in the rod side oil chamber 23A passes through the expansion side flow path 48, and is introduced to the piston side oil chamber 23B while flexibly deforming the expansion side plate valve 34, thereby generating the expansion side damping force.

In this case, the damping force generating apparatus 40 is provided with the following structures, for the purpose of reducing the generation of the compression side damping force by the compression side plate valve 42 in the depth of the compression stroke (FIGS. 5 and 6).

The damping force generating apparatus 40 is provided with a valve spring 61 in a side of the compression side plate valve 42, a backup spring 62 in a side of the cylinder 11, and an intermediate spring receiver 63 pinched between the valve spring 61 and the backup spring 62, between the compression side plate valve 42 and the end surface of the rod guide 21 provided in the cylinder 11. Further, a guide 64 guiding the intermediate spring receiver 63 is provided in the periphery of the piston rod 12, and a stopper portion 64C with which the intermediate spring receiver 63 comes into contact is provided in the guide 64 close to the piston 22.

The guide 64 is constituted by an annular main body portion 64A, a guide portion 64B which is stood from an outer periphery of the main body portion 64A in an axial direction and guides the intermediate spring receiver 63, and a stopper portion 64C which is provided in a side of the piston 22 in the guide portion 64B. An inner periphery of the main body portion 64A of the guide 64 is fixed while being pinched between a small-diameter step portion in the outer periphery of the piston rod 12 and the valve stopper 41. The main body portion 64A is provided with a plurality of through holes 64D penetrating in an axial direction.

The intermediate spring receiver 63 is provided with an annular main body portion 63A, an inner peripheral wall portion 63B provided in a standing manner on an inner periphery of one end surface of the main body portion 63A in an axial direction so as to support an inner periphery of the valve spring 61, and an inner peripheral wall portion 63C and an outer peripheral wall portion 63D which are respectively provided in a standing manner on an inner periphery and an outer periphery of the other end surface of the main body portion 63A in an axial direction so as to support inner and outer peripheries of the backup spring 62. The intermediate spring receiver 63 is guided while making a bush 63E pressure inserted to the inner periphery of the inner peripheral wall portion 63B (the inner peripheral wall portion 63B and the inner peripheral wall portion 63C if necessary) in slidable contact with the outer periphery of the guide portion 64B of the guide 64.

A spring receiver 65 constituted by an annular plate is provided in a back surface of the compression side plate valve 42, and the valve spring 61 is received by the spring receiver 65. An inner periphery of the spring receiver 65 is guided by an outer periphery of the valve stopper 41 mentioned above fixing an inner peripheral side portion of the compression side plate valve 42 so as to freely displace upward and downward. The spring receiver 65 is provided with a plurality of through holes 65A penetrating in an axial direction.

A spring receiver 66 is provided in an end surface of the rod guide 21, and the backup spring 62 is received by the spring receiver 66. The spring receiver 66 is provided with an annular main body portion 66A, and an outer peripheral wall portion 66B provided in a standing manner on an outer periphery of the main body portion 66A in an axial direction so as to support an outer periphery of the backup spring 62. The spring receiver 66 seats on a shallow portion provided in the end surface of the rod guide 21 so as to be fitted thereto, and is fixed position.

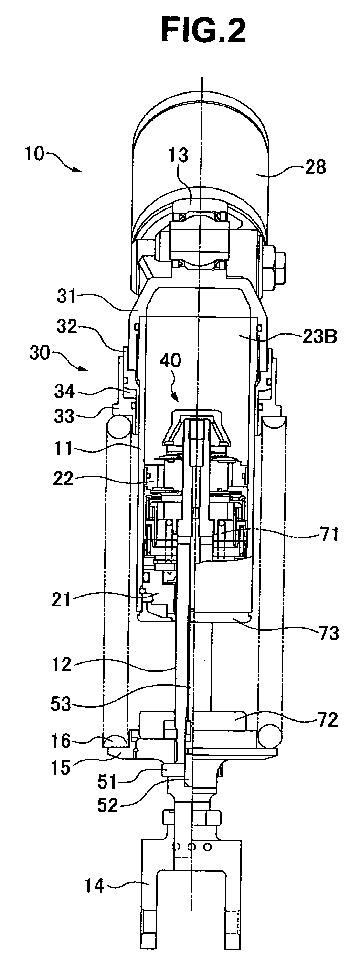

Further, in the damping force generating apparatus 40, a spring force of the valve spring 61 and a spring force of the backup spring 62 are set in a balanced state at a predetermined stroke of the piston rod 12, and the following operations are performed.
(1) In an expanded side (FIGS. 2 and 6) from the stroke in the balanced state, only the spring force of the valve spring 61 is applied to the compression side plate valve 42 by making the spring force of the backup spring 62 larger so as to press the intermediate spring receiver 63 to the stopper portion 64C of the guide 64. At this time, the valve spring 61 is not compressed due to the existence of the stopper portion 64C, a length thereof is kept constant, and the spring force applied to the compression side plate valve 42 is made constant.
(2) In a contracted side (FIGS. 1 and 5) from the stroke in the balanced state, the combined spring force of the valve spring 61 and the backup spring 62 is applied to the compression side plate valve 42 by making the spring force of the valve spring 61 larger so as to make the intermediate spring receiver 63 apart from the stopper portion 64C of the guide 64. The combined spring force is reduced in comparison with the spring force applied only by the valve spring 61.

At this time, a spring constant of the backup spring 62 is made smaller than a spring constant of the valve spring 61.

Further, in the damping force generating apparatus 40, a rebound spring 71 forming a buffering at the most expanded time is provided in parallel thereto in an inner peripheral side of the valve spring 61 and the backup spring 62. The rebound spring 71 is lightly pressure inserted to an outer periphery of an annular spring holding portion 64E provided in a standing manner from the main body portion 64A of the guide 64 to an opposite side to the piston 22 so as to be held, and is collided against the seal presser foot 26 in a side of the rod guide 21 at the maximum expanded time so as to control the expanded end.

Further, in the damping force generating apparatus 40, a bump rubber 72 is provided in an outer periphery of an outer end of the piston rod 12. The bump rubber 72 is collided with a bump stopper cap 73 attached to an opening portion of the cylinder 11 at the minimum compressed time so as to control the contracted end.

Accordingly, in accordance with the present embodiment, the following operations and effects can be achieved.
(a) i) In an initial stage of the compression stroke (the expanded side), only the spring force of the valve spring 61 is applied to the compression side plate valve 42 by enlarging the spring force of the backup spring 62 so as to press the intermediate spring receiver 63 against the stopper portion 64C of the guide 64. Since the valve spring 61 is not compressed and keeps the constant length on the basis of the existence of the stopper portion 64C, the spring force of the valve spring 61 applied to the compression side plate valve 42 is fixed.
ii) In the depth of the compression stroke (the pressed end side), the combined spring force of the valve spring 61 and the backup spring 62 is applied to the compression side plate valve 42 by enlarging the spring force of the valve spring 61 so as to make the intermediate spring receiver 63 apart from the stopper portion 64C of the guide 64. The combined spring force becomes less than the spring force only by the valve spring 61.
iii) On the basis of the items i) and ii), the spring force applied to the compression side plate valve 42 in the depth of the compression stroke is reduced, and the compression side damping force can be reduced. It is possible to improve an absorbability of the road surface vibration in the pressed side from the position near the riding 1G position during the cornering.
(b) On the basis of the item i), it is possible to keep the spring force in the fixed compression stroke range from the expanded side constant, and it is possible to prevent an excessive compression side damping force from being generated.
(c) It is possible to change the stroke position of the balanced state in the items i) and ii) mentioned above and adjust the stroke position (the change point) for reducing the damping force in the item iii) mentioned above, by changing the length of the backup spring 62 or appropriately combining the spring characteristics of the valve spring 61 and the backup spring 62.
(d) Since the stopper portion 64C is provided in the guide 64 of the intermediate spring receiver 63, it is possible to control the maximum compressed length of the valve spring 61, and the excessive spring force is not applied to the compression side plate valve 42. Accordingly, it is possible to prevent the compression side plate valve 42 from being deformed and damaged.
(e) Since the spring constant of the backup spring 62 is made smaller than the spring constant of the valve spring 61, it is possible to reduce the spring force of the backup spring 62, and it is possible to make the influence exerted on the spring load characteristic of the suspension spring minimum.
(f) Since the guide portion 64B guiding the intermediate spring receiver 63 is formed in the outer periphery of the main body portion 64A of the guide 64, it is possible to backup the outer peripheral edge of the compression side plate valve 42 by the guide 64.
(g) Since a plurality of through holes 64D are provided in the main body portion 64A of the guide 64, it is possible to secure a large path area for the working fluid, and it is possible to prevent the cavitation or the working fluid.
(h) Since a plurality of through holes 65A are provided in the spring receiver 65 at the back of the compression side plate valve 42, it is possible to intend an air bleeding at a time of assembling and a weight saving.
(i) Since the inner periphery of the spring receiver 65 is guided by the outer periphery of the valve stopper 41 for the compression side plate valve 42, it is possible to position the spring receiver 65 in a diametrical direction, and it is possible to stabilize the generation of the damping force on the basis of the spring force of the valve spring 61.
(j) Since the rebound spring 71 forming the damping at the maximum expanded time is provided in parallel in the inner peripheral side of the valve spring 61 and the backup spring 62, the excessive spring force of the rebound spring 71 is not applied to the backup spring 62 and the valve spring 61, and does not affect the generation of the compression side damping force.

## Claims

1. A hydraulic shock absorber (10) in which a piston rod (12) is inserted to a cylinder (11), a piston (22) is provided in an inserting portion of the piston rod (12) to the cylinder (11), and a compression side plate valve (42) is provided in a flow path of the piston (22),
wherein a valve spring (61) in a side of the compression side plate valve (42), a backup spring (62) in a side of the cylinder (11), and an intermediate spring receiver (63) pinched by the valve spring (61) and the backup spring (62) are provided between the compression side plate valve (42) and the cylinder (11),
wherein a guide (64) guiding the intermediate spring receiver (63) is provided in the periphery of the piston rod (12), and a stopper portion (64C) against which the intermediate spring receiver (63) is collided is provided in the guide (64) close to the piston (22), and
wherein a spring force of the valve spring (61) and a spring force of the backup spring (62) are set in a balanced state at a predetermined stroke of the piston rod (12), only the spring force of the valve spring (61) is applied to the compression side plate valve (42) by making the spring force of the backup spring (62) larger in the expanded side from a stroke in the balanced state so as to press the intermediate spring receiver (63) to the stopper portion (64C) of the guide (64), and a combined spring force of the valve spring (61) and the backup spring (62) is applied to the compression side plate valve (42) by making the spring force of the valve spring (61) larger in the pressed side from the stroke in the balanced state so as to make the intermediate spring receiver (63) apart from the stopper portion (64C) of the guide (64).

2. A hydraulic shock absorber (10) as claimed in claim 1, wherein a spring constant of the backup spring (62) is made smaller than a spring constant of the valve spring (61).

3. A hydraulic shock absorber (10) as claimed in claim 1 or 2, wherein the guide (64) is constituted by an annular main body portion (64A), a guide portion (64B) provided in a standing manner on an outer periphery of the main body portion (64A) in an axial direction and guiding the intermediate spring receiver (63), and the stopper portion (64C) provided in a side of the piston (22) of the guide portion (64B), and
an inner periphery of the main body portion (64A) is fixed to an outer periphery of the piston rod (12).

4. A hydraulic shock absorber (10) as claimed in any one of claims 1 to 3, wherein the guide (64) is provided with a plurality of through holes (64D) in a main body portion (64A).

5. A hydraulic shock absorber (10) as claimed in any one of claims 1 to 4, wherein the valve spring (61) is provided in the back of the compression side plate valve (42) via a spring receiver (65), and a plurality of through holes (65A) are provided in the spring receiver (65).

6. A hydraulic shock absorber (10) as claimed in claim 5, wherein an inner periphery of the spring receiver (65) is guided by an outer periphery of a valve stopper (41) fixing an inner peripheral side portion of the compression side plate valve (42).

7. A hydraulic shock absorber (10) as claimed in any one of claims 1 to 6, wherein a rebound spring (71) forming a buffering at a maximum expanded time is provided in parallel in an inner peripheral side of the valve spring (61) and the backup spring (62).

8. A hydraulic shock absorber (10) as claimed in any one of claims 1 to 7, wherein the intermediate spring receiver (63) is provided with an annular main body portion (63A), an inner peripheral wall portion (63B) which is provided in a standing manner on an inner periphery of one end surface of the main body portion (63A) in an axial direction so as to support the inner periphery of the valve spring (61), and an inner peripheral wall portion (63C) and an outer peripheral wall portion (63D) which are respectively provided in a standing manner on an inner periphery and an outer periphery of the other end surface of the main body portion (63A) in an axial direction so as to support the inner and outer peripheries of the backup spring (62).

9. A hydraulic shock absorber (10) as claimed in claim 7, wherein the rebound spring (71) is lightly pressure inserted to an outer periphery of an annular spring holding portion (64E) provided in a standing manner from the main body portion (64A) of the guide (64) to an opposite side to the piston so as to be held.
